# EUROPEAN PATENT APPLICATION

(11) **EP 2 892 123 A1**
(43) Date of publication of application: **08.07.2015**
(21) Application number: 13833010.5
(22) Date of filing: 29.08.2013
(51) Int. Cl.: H02J 3/32, H02J 7/35

(54) **POWER FLOW CONTROL SYSTEM, MANAGEMENT DEVICE, AND PROGRAM**

(30) Priority: 31.08.2012 JP 2012191747
(71) Applicant: Panasonic Intellectual Property Management Co., Ltd., Osaka-shi, Osaka 540-6207 (JP)
(72) Inventor: BABA, Akira, Osaka 540-6207 (JP); NAKASONE, Haruka, Osaka 540-6207 (JP)
(74) Representative: Appelt, Christian W.
(86) International application number: PCT/JP2013/005114
(87) International publication number: WO 2014/034123

(57) **Abstract**

A power flow control system controls power flow in a first power network shared by customer facilities. The first power network is shared by a customer facility group that includes first customer facilities each including at least a load device and a power generator, and second customer facilities each including at least a load device and an electric storage device. Each of measurement devices measures, for each unit time period, electric power consumed by a load device and electric power generated by a power generator. A management device instructs timings of charging and discharging of the electric storage devices in the customer facility group such that the power flow at a connection node between the first power network and a second power network transmitting electric power from a power plant to the first power network satisfies a predetermined constraint condition using data on electric power acquired from the measurement devices.

## Description

### TECHNICAL FIELD

The present invention relates to a power flow control system configured to control the power flow in a power network, a management device used in the power flow control system, and a program for causing a computer to function as the management device.

### BACKGROUND ART

Heretofore, systems have been proposed in which a plurality of power generation load units each including a solar cell and an AC load and a control center including a shared storage battery are connected to a commercial power supply (power network thereof) (see JP 2002-233077A (hereinafter referred to as "Document 1"), for example). In the configuration adopted by the system described in Document 1, with regard to the plurality of power generation load units, a power generation load unit having excess generated electric power from its solar cell is caused to charge the shared storage battery, and a power generation load unit of which electric power generated from its solar cell is not sufficient is supplied electric power from the shared storage battery.

According to this configuration, an effect has been obtained that, even when electric power is not sufficient in some power generation load units due to an increase in load, bad weather, or the like, excess electric power of other power generation load units is supplied via the shared storage battery to the power generation load units in which the generated electric power is not sufficient. Also, Document 1 discloses that adopting the above configuration can reduce the amount of electric power that is supplied from the commercial power supply.

Document 1 also describes, in its Background Art, a problem in that it is not economical to provide a solar power generation-based power supply system constituted by a solar cell, a storage battery, and a load in each customer facility (customer), since an expensive storage battery and a controller are required in each customer facility.

In the configuration described in Document 1, one shared storage battery is shared by a plurality of power generation load units. Supposing that the power generation load unit is provided in each customer facility in a region where there are a plurality of customer facilities, electric power can be transferred between the customer facilities in the region through charging and discharging of the shared storage battery, and as a result the amount of electric power supplied from the commercial power supply can be suppressed in the region as a whole.

However, if the shared storage battery is provided in preparation for the highest possible sum of excess electric power of power generation load units, the shared storage battery needs to have a large capacity. Since manufacturing of a large capacity shared storage battery is difficult, a very expensive shared storage battery is needed if the number of customer facilities increases. Also, a large capacity shared storage battery requires a lot of storage batteries, which may be called a storage battery pack, a storage battery unit, a storage battery module or the like, and thus an installation site dedicated for the shared storage battery needs to be secured.

On the other hand, in the technique described in the "Background Art" of Document 1, storage batteries are provided in customer facilities in a distributed manner, and thus a dedicated installation site is not required unlike the shared storage battery, and it is easy to secure an installation site for each storage battery. Accordingly, when the cost needed to secure the installation site is included in the cost of the storage battery, it cannot be said that the cost in the case where the shared storage battery is installed is always lower than the case where the storage battery is provided in each customer facility.

However, in this configuration, since the storage battery is utilized according to supply and demand of electric power in each customer facility, the amount of electric power supplied from the commercial power supply cannot be suppressed in a region as a whole where the plurality of customer facilities exist.

Besides, even in a petroleum-fired or gas-fired thermal power plant, which can comparatively easily adjust its output of generated electric power, the flexibility (adjustment ability) in electric power output thereof would diminish when the margin of supply relative to demand in electric power decreases. Therefore, it is desirable that the fluctuation in the electric power demand seen from the power plant is reduced. However, the objectives of each customer for using the storage battery would be to reduce the purchasing of electric power and/or to increase income by selling excess electric power in each customer facility. Accordingly, it is difficult to reduce fluctuation in the electric power demand seen from the power plant by merely the charging and discharging of the storage battery being controlled in each customer facility.

### SUMMARY OF INVENTION

An object of the present invention is to provide a power flow control system that can suppress fluctuation in electric power demand in a region as a whole where a plurality of customer facilities exist without providing a shared storage battery, and furthermore to provide a management device for use in the power flow control system, and a program for causing a computer to function as the management device.

A power flow control system according to the present invention is a power flow control system configured to control a power flow in a first power network shared by a plurality of customer facilities that each includes a load device configured to consume electric energy. The first power network is connected with a second power network configured to transmit electric power from a power plant to the first power network. The plurality of customer facilities include: a plurality of first customer facilities that each include at least a power generator configured to generate electric energy and a load device; and a plurality of second customer facilities that each include at least an electric storage device configured to perform charging and discharging of electric energy and a load device. The power flow control system includes: a plurality of first measurement devices that are in one-to-one correspondence with the plurality of customer facilities, and are each configured to measure, for each unit time period, electric power consumed by a load device included in a corresponding customer facility; a plurality of second measurement devices that are in one-to-one correspondence with the plurality of first customer facilities, and are each configured to measure, for each unit time period, electric power generated by a power generator included in a corresponding first customer facility; and a management device configured to instruct timings of charging and discharging of each of the electric storage devices included in the plurality of second customer facilities such that a predetermined constraint condition is satisfied using data on the electric power, as the result of measurement, acquired from the plurality of first measurement devices and the plurality of second measurement devices.

It is preferable that, in the power flow control system, the constraint condition is selected from among: limiting fluctuation of the power flow between the first power network and the second power network in a day to an allowable range; suppressing fluctuation in the amount of electric power that flows from the second power network to the first power network; and prohibiting reverse power flow from the first power network to the second power network.

It is preferable that, in the power flow control system, the management device is configured to select the constraint condition from two or more of candidates.

It is preferable that, in the power flow control system, the power generator includes a solar cell, and the management device includes: a function configured to predict, for each unit time period, the amounts of electric power consumed by the load devices and the amounts of electric power generated by the power generators in a predetermined period using the amount of solar radiation that is predicted in the predetermined period and past records that are acquired from the plurality of first measurement devices and the plurality of second measurement devices; and another function configured to generate a schedule regarding timings of charging and discharging of each of the electric storage devices such that the constraint condition is satisfied using a prediction result.

It is further preferable that the power flow control system includes a sensor configured to monitor a power flow at a connection node between the first power network and the second power network, and the management device is configured to change the schedule if a prediction error between an output from the sensor and the prediction result exceeds a predetermined reference value.

It is preferable that the power flow control system includes a plurality of third measurement devices that are in one-to-one correspondence with the plurality of second customer facilities, and are each configured to measure a remaining battery level of a storage battery included in an electric storage device of a corresponding second customer facility, and, for each of the plurality of second customer facilities, the management device is configured to allow discharge of an electric storage device including a storage battery only in a day previous to a day when the storage battery is predicted to be fully charged.

It is preferable that, in the power flow control system, the management device is configured to set an upper limit of a total sum of electric power discharged from the electric storage devices in the plurality of second customer facilities to a total sum of electric power that flows to the first power network from the plurality of first customer facilities that each include a power generator.

Also, a management device for use in the power flow control system described above is provided, and furthermore, a program that causes a computer to function as the management device described above is provided. The present invention is not limited to the program, and may be a computer-readable recording medium that records the program.

According to the configuration of the present invention, there is an advantage in that fluctuation in electric power demand can be suppressed without providing a shared storage battery, since power generators and electric storage devices, which exist in a region where customer facilities exist, are operated in combination.

### BRIEF DESCRIPTION OF DRAWINGS

A preferable embodiment according to the present invention will be described below in more detail. Other features and advantages of the present invention will be better understood with reference to the following detailed description and the attached drawings where:
FIG. 1 is a block diagram illustrating a power flow control system according to an embodiment;
FIG. 2 is a diagram illustrating a connection example of customer facilities in the embodiment;
FIG. 3 is a diagram illustrating an operation of a comparative example relative to the embodiment; and
FIG. 4 is a diagram illustrating an operation example of the power flow control system according to the embodiment.

### DESCRIPTION OF EMBODIMENTS

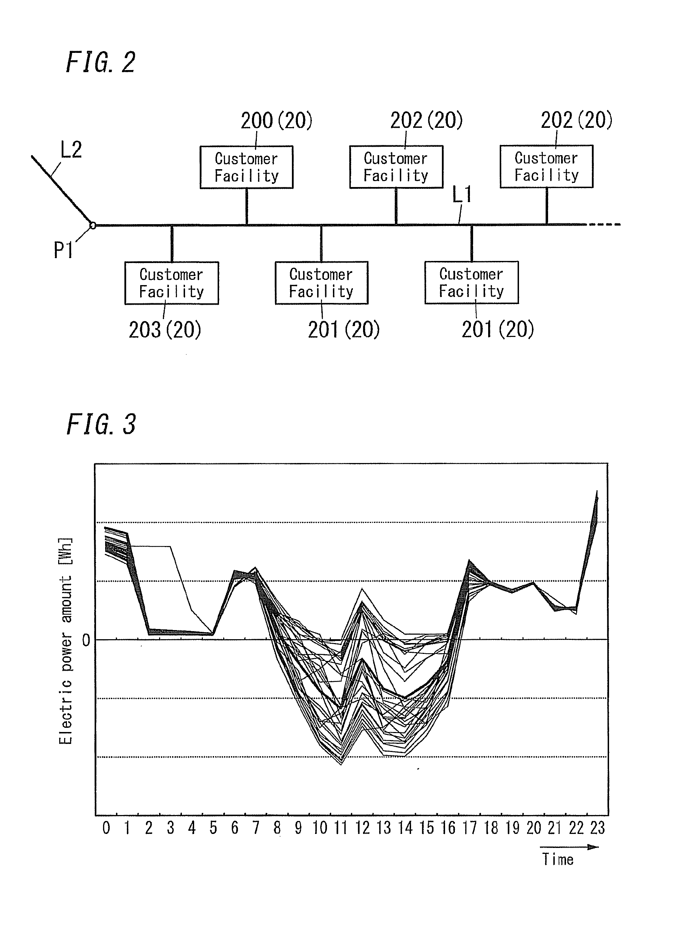

A power flow control system according to the present embodiment includes, as shown in FIG. 2, a first power network **L1** and a second power network **L2.** The first power network **L1** is provided in a region where a group of customer facilities constituted by a plurality of customer facilities **20** exists, and is shared by the group of customer facilities. The second power network **L2** is configured to transmit electric power supplied from an electric utility to the first power network **L1**. It is assumed that the first power network **L1** is a low voltage distribution line, and the second power network **L2** is a high voltage distribution line. Note that in a case where each of the plurality of customer facilities **20** is a dwelling unit of a housing complex or a tenant of a tenant building, the first power network **L1** may include a high voltage distribution line.

Hereinafter, as an example, the explanation is made based on a case where reverse power flow from the first power network **L1** to the second power network **L2** is prevented by controlling the power flow in the first power network **L1.** Note that it is possible to control the power flow by setting conditions such that the reverse power flow from the first power network **L1** to the second power network **L2** is allowed.

Each of the plurality of customer facilities **20** in the region connected to the first power network **L1** has at least a function of consuming electric energy out of three functions of consuming, generating, and accumulating electric energy. Also, the plurality of customer facilities **20** in the region includes: a plurality of customer facilities having the function of generating electric energy; and a plurality of customer facilities having the function of accumulating electric energy. Furthermore, each of the plurality of customer facilities **20** may have both the functions of generating and accumulating electric energy.

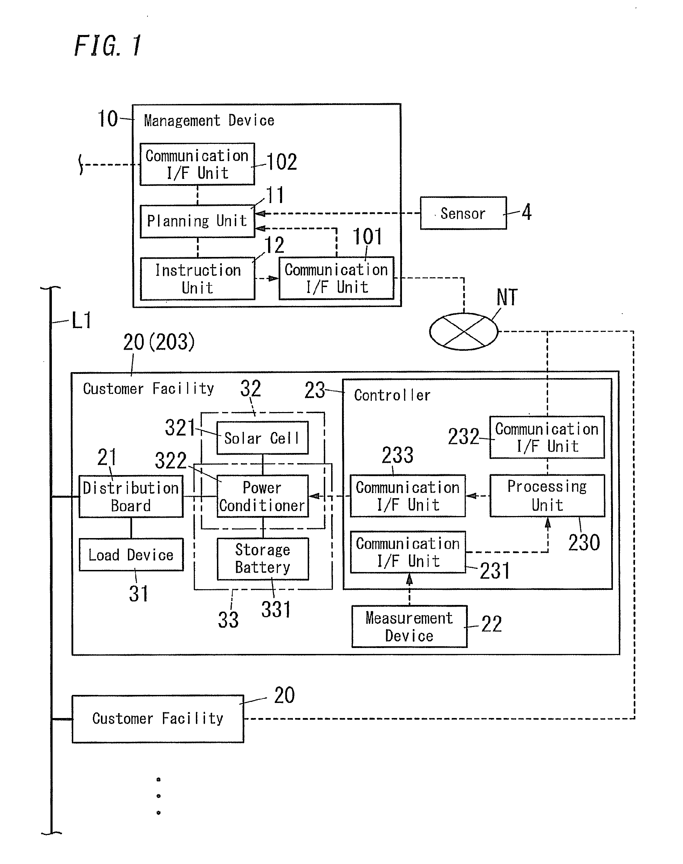

Electric energy is consumed by a later-described load device **31,** and is generated by a later-described power generator **32** (see FIG. 1). In the example described below, the power generator **32** is a solar power generator that includes a solar cell **321** and a power conditioner **322.** Note that the power generator **32** may be a power generator that uses renewable energy such as a wind power generator or a hydroelectric power generator, a gas power generator that uses a micro gas turbine, a fuel cell, or a combination thereof.

Examples of the function of accumulating electric energy includes a function that the accumulated energy can be used as electric energy and a function that the electric energy is converted into and accumulated as thermal energy. The former is a function that enables changing the time slot in which the electric energy is used, and can be realized by a case where an electric storage device **33** installed in the customer facility **20** (see FIG. 1) is used and a case where a storage battery mounted in an electric vehicle such as an electric automobile is used. The storage battery of an electric vehicle can be used for traveling of the electric vehicle, and also can be used as a replacement for the electric storage device **33.** The function of converting the electric energy into thermal energy and accumulating the thermal energy is a function that prevents excess electric energy from being discarded without being used, and a heat pump type water heater (not shown) is used. The electric storage device **33** includes a storage battery **331** and shares the power conditioner **322** with the solar cell **321.** The remaining battery level of the storage battery **331** is measured by a measurement device **22** at a unit time interval.

A customer facility **200**, customer facilities **201**, customer facilities **202**, and a customer facility **203** are shown in FIG. 2. The customer facility **200** includes only the load device **31**. The customer facility **201** includes the load device **31** and the power generator **32**. The customer facility **202** includes the load device **31** and the electric storage device **33**. The customer facility **203** includes the load device **31**, the power generator **32**, and the electric storage device **33**. A water heater is not considered in FIG. 2. Also, as described above, the two or more customer facilities **201** and the two or more customer facilities **202** are connected to the first power network **L1,** and the customer facility **203** includes functions of both the customer facility **201** and the customer facility **202**. The customer facilities **201** and **203** according to the present embodiment correspond to a plurality of first customer facilities. Each of the first customer facilities includes at least the power generator **32** and the load device **31**. The customer facilities **202** and **203** according to the present embodiment correspond to a plurality of second customer facilities. Each of the second customer facilities includes at least the electric storage device **33** and the load device **31**.

The electric storage device **33** is typically used in combination with the power generator **32** in many cases, and thus the capacity of the electric storage device **33** is set to such a degree that demand for electric power at night, during which the power generator **32** does not generate power, is satisfied. For example, for a general house, the power generation capacity of the power generator **32** is approximately 3 to 4 kW, for example, and the storage capacity of the electric storage device **33** is approximately 9 to 15 kWh, for example. Note that the electric storage device **33** may not only accumulate excess electric power of the power generator **32**, but also accumulate electric power purchased in a time slot in which the electricity charge rate is low.

In the following, reference signs **200** to **203** will be used when the function of the customer facility **20** needs to be distinguished, and reference sign **20** will be used otherwise.

Although a larger number of customer facilities **20** connected to the first power network **L1** is better for achieving the object of the present embodiment, the number of customer facilities **20** is restricted by the electric power capacity of the first power network **L1.** Also, when the number of customer facilities **20** connected to the first power network **L1** increases, the amount of calculation needed to achieve the object increases, and the amount of information needed for calculation increases. Thus, the number of customer facilities **20** is determined to be within a practical range. According to these requirements, the number of customer facilities **20** to be connected to the first power network **L1** would be approximately 5 to 100, for example, and desirably, the number is approximately 5 to 15. Also, it is desirable that the customer facilities **201** and **203** that each include a power generator **32** account for approximately 20 to 50% of the total. It is desirable that the customer facilities **202** and **203** that each include an electric storage device **33** account for approximately 20 to 50% of the total.

The customer facility **203** that includes the load device **31**, the power generator **32**, and the electric storage device **33** is shown in FIG. 1 as a typical example. The customer facility **200** that includes only the load device **31**, the customer facility **201** that includes the load device **31** and the power generator **32**, and the customer facility **202** that includes the load device **31** and the electric storage device **33** are not shown in FIG. 1. Operations similar to the customer facility **203** that includes the power generator **32** and the electric storage device **33** can be imitated by combining operations of the customer facility **201** that includes the power generator **32** and operations of the customer facility **202** that includes the electric storage device **33.**

The customer facility **20** includes a distribution board **21** connected to the first power network **L1.** The electric power received by the distribution board **21** is distributed to the load device **31**. The power generator **32** includes the solar cell **321** and the power conditioner **322**. The power conditioner **322** shown in the diagram is also used for charging and discharging of the storage battery **331**. That is, the power conditioner **322** includes a function configured to convert DC power outputted from the solar cell **321** into AC power, and a function configured to convert DC power outputted from the storage battery **331** into AC power. Furthermore, the power conditioner **322** also includes a function configured to convert AC power inputted from the first power network **L1** to the power conditioner **322** into DC power to charge the storage battery **331.** That is, the power conditioner **322** functions as a bi-directional converter for charging and discharging the storage battery **331.**

The customer facility **20** includes a measurement device **22** configured to measure: electric power that flows in and out between a distribution network in the customer facility **20** and the first power network **L1;** electric power consumed by the load device **31;** electric power generated by the power generator **32;** and electric power charged to and discharged from the electric storage device **33.** In other words, the measurement device **22** is a device that combines a first measurement device configured to measure the electric power consumed by the load device **31** for each unit time period, a second measurement device configured to measure the electric power generated by the power generator **32** for each unit time period, and a third measurement device configured to measure the remaining battery level of the storage battery **331** which the electric storage device **33** includes. The measurement device **22** is configured to communicate with a HEMS (Home Energy Management System) controller (hereinafter referred to as "controller") **23** provided in each customer facility **20.** The controller **23** is configured to regularly acquire measurement values from the measurement device **22** at unit time intervals. The period at which the controller **23** acquires the measurement values from the measurement device **22** is set appropriately to a period of approximately 1 to 30 minutes. The controller **23** is configured to communicate with a management device **10** that manages power flow in the first power network **L1** via a communication network NT. The management device **10** is a computer server, and the controller **23** functions as a client of the management device **10.** That is, the management device **10** is a computer, and executes a program that causes the computer to realize later-described functions. The program is installed to the management device **10** using a computer-readable recording medium in which the program is recorded, for example.

The controller **23** includes a communication interface unit (hereinafter referred to as "communication I/F unit") **231** configured to acquire the measurement values from the measurement device **22,** and a communication I/F unit **232** configured to communicate with the management device **10.** Also, the controller **23** includes a communication I/F unit **233** configured to communicate with at least the electric storage device **33** among the load device **31,** the power generator **32,** and the electric storage device **33.**

The controller **23** is configured to, when acquiring the measurement value from the measurement device **22** via the communication I/F unit **231,** transfer the acquired measurement value to the management device **10** via the communication I/F unit **232.** Also, the controller **23** is configured to, when receiving an instruction from the management device **10** via the communication I/F unit **232,** to transfer the received instruction to the electric storage device **33** via the communication I/F unit **233.** Accordingly, the electric storage device **33** performs control for charging and discharging upon receiving an instruction from the management device **10.** Furthermore, the controller **23** includes a processing unit **230** configured to control transmission and reception performed by the communication I/F units **231** to **233.** The controller **23** includes a device such as a microcontroller that operates according to a program as a main hardware element.

The management device **10** includes a communication I/F unit **101** configured to communicate with the controllers **23**, and a communication I/F unit **102** configured to acquire weather information via a wide area network such as the Internet. Also, the management device **10** includes a planning unit **11** and an instruction unit **12.** The planning unit **11** is configured to make a schedule of charging and discharging with respect to the electric storage devices **33** in respective customer facilities **20** using the measurement values acquired from the respective customer facilities **20.** The instruction unit **12** is configured to give instructions according to the schedule made by the planning unit **11** to respective customer facilities **20.** In other words, the planning unit **11** is configured to make schedules of charging and discharging individually with respect to the electric storage devices **33** in the second customer facilities (customer facilities **202** and **203**). The instruction unit **12** is configured to give instructions individually to the second customer facilities according to the schedules made by the planning unit **11.** For example, the planning unit **11** is configured to make the schedules of charging and discharging under a constraint condition that reverse power flow from the first power network **L1** to the second power network **L2** is prohibited. The planning unit **11** can select an appropriate constraint condition such as a constraint condition that the fluctuation, in a day, of power flow between the first power network **L1** and the second power network **L2** is limited in a predetermined allowable range, or a constraint condition that the fluctuation of the amount of electric power (electric power amount) that flows from the second power network **L2** to the first power network **L1** is suppressed. The constraint condition can be set with focus on the price when purchasing or selling the electric power, other than with focus on the electric power amount. The planning unit **11** of the management device 10 is configured to select a constraint condition from two or more candidates.

FIG. 3 shows an example of change, in a day, of the power flow between the first power network **L1** and the second power network **L2** in a period of approximately one month (from mid-October to early November). In FIG. 3, the horizontal axis denotes time elapse in a day, and the vertical axis denotes the amount of electric power (electric power amount) that flows in a unit time period through a connection node **P1** between the first power network **L1** and the second power network **L2.** The center of the vertical axis designates a state in which the electric power amount is 0, the period in which the sign is positive is a period in which power flows from the second power network **L2** to the first power network **L1,** and the period in which the sign is negative is a period in which reverse power flows from the first power network **L1** to the second power network **L2.** That is, reverse power flow occurs approximately from 8:00 to 16:30.

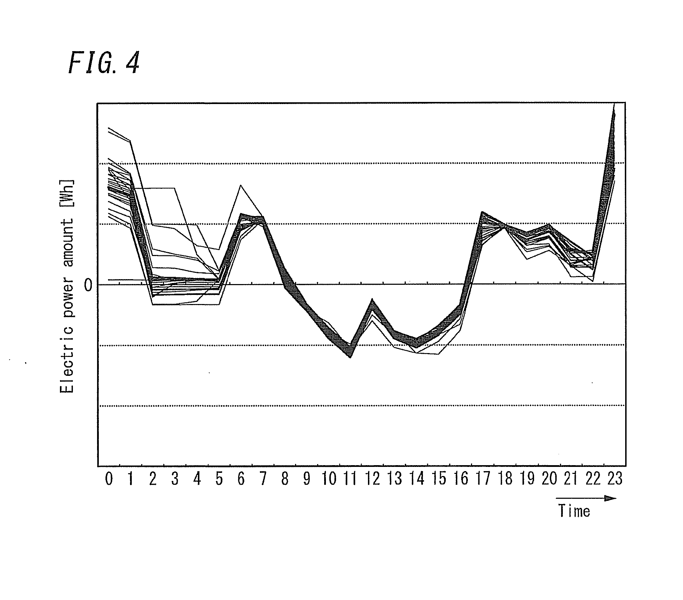

By imposing, on the planning unit **11,** a constraint condition that the fluctuation, in a day, of the power flow between the first power network **L1** and the second power network **L2** is limited in a predetermined allowable range, it is possible to greatly reduce the fluctuation of the electric power amount in a day, as shown in FIG. 4.

In order to satisfy such a constraint condition, the planning unit **11** of the management device **10** focuses on the amounts of electric power consumed by the load devices **31,** the amounts of electric power generated by the power generators **32,** and the amounts of electric power charged to and discharged from the electric storage devices **33.** The amount of electric power is obtained for each unit time period (a time period during which the amount of electric power is acquired, for example).

In a case where, in the customer facility **201,** the amount of electric power generated by the power generator **32** exceeds the amount of electric power consumed by the load device **31,** resulting in a surplus, the surplus is caused to flow to the first power network **L1.** In this state, if the load device **31** is operated in the customer facility **200,** the electric power that flowed from the customer facility **201** flows to the customer facility **200** via the first power network **L1**, and is consumed by the load device **31** in the customer facility **200.** Also, if charging of the electric storage device 33 is possible in the customer facility **202,** the electric power that flowed from the customer facility **201** is caused to flow to the customer facility 202 via the first power network **L1**, and can be used to charge the electric storage device **33** in the customer facility **202.**

In a case where, in the customer facility **201,** the amount of electric power generated by the power generator **32** is less than the amount of electric power consumed by the load device **31,** resulting in a shortage, electric power needs to be caused to flow from the first power network **L1** in order to operate the load device **31.** If the electric power is accumulated in the electric storage device **33** of the customer facility **202,** it is possible to cause electric power to flow to the customer facility **201** from the electric storage device **33** via the first power network **L1**, and use the electric power to operate the load device **31** in the customer facility **201.** If the remaining battery level of the electric storage device **33** in the customer facility **202** is insufficient to operate the load device **31** in the customer facility **201,** electric power is purchased via the second power network **L2**.

The operation described above is an example. Basic operations are combinations of the following two types of operations. That is, a first operation is to cause the customer facility **202** (customer facility **203**) including the electric storage device **33** to store excess electric power generated in the customer facility **201** (customer facility **203**) including the power generator **32.** A second operation is to cause, when electric power needs to be flowed to the customer facility 20 from the first power network **L1**, the customer facility **202** (customer facility **203**) including the electric storage device **33** to supply electric power within an allowable range.

In the operation example described above, the planning unit **11** is configured to determine operations in an unit time period based on the amounts of electric power in a previous unit time period acquired from the customer facilities **20.** In order to perform such an operation, the management device **10** needs to determine the operations in the next unit time period instantaneously with respect to the measurement results of the measurement devices **22,** and furthermore, the electric storage devices **33,** which are the control targets, need to have high responsiveness.

In contrast, if the amount of electric power to be consumed and the amount of electric power to be generated for each customer facility **20** in a predetermined period (period of approximately one to two weeks) are predicted, the management device **10** can make schedules of charging and discharging of the electric storage devices **33** in advance. In this case, compared with the case where the management device **10** determines the control contents in real time, the processing load of the management device **10** in a unit time period is reduced, and control of the electric storage devices **33** is easily adjusted. However, a prediction error may occur when this operation is performed. It is therefore desirable that the management device **10** is configured to change the control contents planned in advance when the prediction error exceeds a predetermined reference value.

In order to make the schedules for a period of approximately one to two weeks in advance, as described above, change in the amount of electric power in each customer facility **20** needs to be predicted, and also the amount of solar radiation needs to be predicted since the solar cell **321** is used for the power generators **32.** Therefore, the management device **10** includes a function configured to accumulate records of change in the amount of electric power for respective customer facilities **20** that are collected via the controllers **23** of the customer facilities **20,** and a function configured to acquire the weather forecast (temporal variation in the amount of solar radiation) via the communication I/F unit **102.** The planning unit **11** is configured to predict, using these pieces of information, the amounts of electric power that will be consumed by the load devices **31** and the amounts of electric power that will be generated by the power generators **32,** for each unit time period, in the period of the next approximately one to two weeks. Furthermore, the planning unit **11** is configured to generate schedules in terms of the timings of charging and discharging of each of the electric storage devices **33** using the prediction result.

It is conceivable that linear programming is used for the prediction operation, for example. That is, the planning unit **11** is configured to obtain, for each customer facility **20,** linear prediction equations for each unit time period for the amount of electric power to be consumed, the amount of electric power to be generated, and the remaining battery level of the storage battery **331,** based on the records of change in the amount of electric power for the customer facility **20.** Furthermore, the planning unit **11** is configured to plan, using combinations of the obtained linear prediction equations, the timings of charging and discharging of the electric storage devices **33** such that an appropriate constraint condition described above is satisfied. Note that the constraint condition is expressed by an appropriate cost function.

For example, in a case of imposing a constraint condition that the fluctuation, in a day, of the power flow at the connection node **P1** between the first power network **L1** and the second power network **L2** is limited in a predetermined allowable range, a cost function is needed that expresses the allowable range.

A cost function may be determined such that the amount of electric power, at the connection node **P1,** that flows from the second power network **L2** to the first power network **L1** is minimized. Setting a constraint condition using such cost functions makes it possible to control the power generation amount of a power plant in a planned manner, and makes it possible to deal with the electric power fluctuation in the first power network **L1** even in a case where the flexibility in the power generation amount of a thermal power plant is not sufficient.

Alternatively, it is possible to set a cost function such that reverse power flow to the second power network **L2** at the connection node **P1** between the first power network **L1** and the second power network **L2** is prevented. Giving a constraint condition that reverse power flow is prevented makes it possible to transfer electric power between the customer facilities **20** even in a case where reverse power flow to a power grid is prohibited. In this case, by measuring the transfer of electric power in the plurality of customer facilities **20** that share the first power network **L1,** it is also possible to determine the buying and selling amount of electric power in the region.

Note that when the timings of charging and discharging of the electric storage devices **33** provided in the customer facilities **20** are planned, losses of the electric power in the electric power transmission between the customer facilities **20** and losses accompanying the charging and discharging of the electric storage devices **33** need to be considered. Also, the above mentioned constraint conditions are each set with respect to the power flow at the connection node **P1** between the first power network **L1** and the second power network **L2**, and therefore it is desirable to provide a sensor **4** configured to monitor the power flow at the connection node **P1** and detect a prediction error using an output of the sensor **4.**

Incidentally, even when the storage battery **331** has a remaining battery level, the future remaining battery level of the storage battery **331** may become insufficient for a subsequent demand due to the discharge thereof. Accordingly, it is desirable that the management device **10** is configured to allow discharge from the electric storage device **33** that includes the storage battery **331** only in a day previous to a day when a storage battery **331** is predicted to be fully charged. By this operation, it is possible to avoid occurring electric power shortage in a time slot in which the electric power is expected to be discharged from the electric storage device **33** to compensate for a deficiency in the electric power, since it is predicted that the remaining battery level of the storage battery **331** can be restored in the following day even if the storage battery **331** discharges. Also, in this case, it is desirable that the upper limit of the total amount of electric power discharged from the electric storage devices **33** in the group of customer facilities that share the first power network **L1** is the total amount of electric power that flows to the first power network **L1** from the customer facilities **201** that include the power generators **32.**

The management device **10** may be configured to switch the two or more constraint conditions appropriately. For example, a constraint condition may be set such that the power flow from the second power network **L2** is reduced in order to reduce the emission amount of carbon dioxide in normal time, and a constraint condition may be set such that the reverse power flow to the second power network **L2** is increased in a period in which the supply capability of electric power from the second power network **L2** decreases.

In the configuration example described above, the load device **31,** the power generator **32,** and the electric storage device **33** are illustrated as devices provided in the customer facility **20.** In a case where charging and discharging of a storage battery mounted in an electric vehicle is performed in the customer facility **20,** the electric vehicle needs to be included as a device provided in the customer facility **20.** In a case where the storage battery of the electric vehicle is used, it is necessary to predict a period during which the electric vehicle is connected.

In a case where only charging of the storage battery mounted in the electric vehicle is performed, it is possible to use the storage battery for absorbing a surplus of electric power, similarly to charging of the electric storage device **33,** but the storage battery cannot be used for transferring electric power to the other customer facilities **20,** unlike the electric storage device **33.** In a case where charging and discharging of the storage battery mounted in the electric vehicle are performed, the storage battery can be handled similarly to the electric storage device **33,** but the remaining battery level is calculated considering traveling of the electric vehicle.

Also, for the purpose of absorbing surplus of electric power solely, it is desirable to use a heat pump type water heater, as with the case where only charging of the storage battery of the electric vehicle is performed. In a case where the heat pump type water heater exists in a customer facility **20** that shares the first power network **L1**, it is possible to allow the water heater to absorb the surplus of electric power.

As described above, the power flow control system according to the present embodiment is configured to control a power flow in a first power network **L1.** The first power network **L1** is shared by customer facilities **20.** Each of the customer facilities **20** includes a load device **31** configured to consume electric energy. The first power network **L1** is connected to a second power network **L2** configured to transmit electric power from a power plant to the first power network **L1**. The customer facilities **20** include first customer facilities (customer facilities **201** and **203**) and second customer facilities (customer facilities **202** and **203**). Each of the first customer facilities includes at least a power generator **32** configured to generate electric energy in addition to a load device **31.** Each of the second customer facilities includes at least an electric storage device **33** configured to perform charging and discharging of electric energy in addition to a load device **31.** The power flow control system includes first measurement devices, second measurement devices, and a management device **10.** The first measurement devices are in one-to-one correspondence with the customer facilities **20.** Each of the first measurement devices is configured to measure, for each unit time period, electric power consumed by a load device **31** included in a corresponding customer facility **20.** The second measurement devices are in one-to-one correspondence with the first customer facilities. Each of the second measurement devices is configured to measure, for each unit time period, electric power generated by a power generator **32** included in a corresponding first customer facility. The management device **10** is configured to instruct timings of charging and discharging of each electric storage device **33** included in the second customer facilities such that a predetermined constraint condition is satisfied using data on the electric power, as the result of measurement, acquired from the first measurement devices and the second measurement devices.

It is preferable that, as with the power flow control system according to the present embodiment, the above constraint condition is selected from among limiting fluctuation of the power flow between the first power network **L1** and the second power network **L2** in a day to an allowable range, suppressing fluctuation in the amount of electric power that flows from the second power network **L2** to the first power network **L1**, and prohibiting reverse power flow from the first power network **L1** to the second power network **L2.**

It is preferable that, as with the power flow control system according to the present embodiment, the management device **10** is configured to select the above constraint condition from two or more candidates.

It is preferable that, as with the power flow control system according to the present embodiment, the power generator **32** includes a solar cell **321**, and the management device **10** includes the following two functions. A first function is to predict, for each unit time period, amounts of electric power consumed by the load devices **31** and amounts of electric power generated by the power generators **32** in a predetermined period using the amount of solar radiation predicted in the predetermined period and past records that are acquired from the first measurement devices and the second measurement devices. A second function is to generate a schedule regarding timings of charging and discharging of each of the electric storage devices **33** such that the above constraint condition is satisfied, using a prediction result.

It is preferable that, as described in the present embodiment, the power flow control system includes a sensor **4** configured to monitor a power flow at a connection node **P1** between the first power network **L1** and the second power network **L2**. In this case, the management device **10** is configured to change the above schedule if a prediction error between an output from the sensor **4** and the above prediction result exceeds a predetermined reference value.

It is preferable that, as described in the present embodiment, the power flow control system further includes third measurement devices. The third measurement devices are in one-to one correspondence with the second customer facilities. Each of the third measurement device is configured to measure a remaining battery level of a storage battery **331** included in an electric storage device **33** of a corresponding second customer facility. In this case, the management device **10** is configured to, for each of the second customer facilities, allow discharge of an electric storage device **33** including a storage battery **331** only in a day previous to a day when the storage battery **331** is predicted to be fully charged.

It is preferable that, as with the power flow control system according to the present embodiment, the management device **10** is configured to set an upper limit of a total sum of electric power discharged from the electric storage devices **33** in the second customer facilities to a total sum of electric power that flows to the first power network **L1** from the first customer facilities that each include the power generator **32.**

The management device **10** according to the present embodiment is for use in the power flow control system.

The program according to the present embodiment is a program that causes a computer to function as the management device **10.**

Note that the measurement devices **22** in the customer facility **200**, the customer facility **201,** the customer facility **202,** and the customer facility **203** may be different. In other words, the customer facility **200** may include, as the measurement device **22,** only the first measurement device configured to measure, for each unit time period, the electric power consumed by the load device **31.** The customer facility **201** may include, as the measurement device **22,** the first measurement device and the second measurement device configured to measure, for each unit time period, the electric power generated by the power generator **32.** The customer facility **202** may include, as the measurement device **22,** the first measurement device and the third measurement device configured to measure the remaining battery level of the storage battery **331** included in the electric storage device **33.** The customer facility **203** includes, as the measurement device **22,** the first measurement device, the second measurement device, and the third measurement device.

Although the present invention has been described in a preferred embodiment, various modifications and variations are possible by those skilled in the art without departing from the spirit or scope of this invention, that is, without departing from the claims.

## Claims

1. A power flow control system configured to control a power flow in a first power network shared by a plurality of customer facilities that each comprise a load device configured to consume electric energy,
the first power network being connected with a second power network configured to transmit electric power from a power plant to the first power network,
the plurality of customer facilities comprising:
a plurality of first customer facilities that each comprise at least a power generator configured to generate electric energy and a load device; and
a plurality of second customer facilities that each comprise at least an electric storage device configured to perform charging and discharging of electric energy and a load device, and
the power flow control system comprising:
a plurality of first measurement devices that are in one-to-one correspondence with the plurality of customer facilities, and are each configured to measure, for each unit time period, electric power consumed by a load device included in a corresponding customer facility;
a plurality of second measurement devices that are in one-to-one correspondence with the plurality of first customer facilities, and are each configured to measure, for each unit time period, electric power generated by a power generator included in a corresponding first customer facility; and
a management device configured to instruct timings of charging and discharging of each of the electric storage devices included in the plurality of second customer facilities such that a predetermined constraint condition is satisfied using data on the electric power, as the result of measurement, acquired from the plurality of first measurement devices and the plurality of second measurement devices.

2. The power flow control system according to claim 1,
wherein the constraint condition is selected from among limiting fluctuation of the power flow between the first power network and the second power network in a day to an allowable range, suppressing fluctuation in an amount of electric power that flows from the second power network to the first power network, and prohibiting reverse power flow from the first power network to the second power network.

3. The power flow control system according to claim 1 or 2,
wherein the management device is configured to select the constraint condition from two or more candidates.

4. The power flow control system according to any one of claims 1 to 3,
wherein the power generator comprises a solar cell, and
the management device comprises:
a function configured to predict, for each unit time period, amounts of electric power consumed by the load devices and amounts of electric power generated by the power generators in a predetermined period using an amount of solar radiation that is predicted in the predetermined period and past records that are acquired from the plurality of first measurement devices and the plurality of second measurement devices; and
a function configured to generate a schedule regarding timings of charging and discharging of each of the electric storage devices such that the constraint condition is satisfied using a prediction result.

5. The power flow control system according to claim 4, comprising a sensor configured to monitor a power flow at a connection node between the first power network and the second power network,
wherein the management device is configured to change the schedule if a prediction error between an output from the sensor and the prediction result exceeds a predetermined reference value.

6. The power flow control system according to any one of claims 1 to 5, further comprising a plurality of third measurement devices that are in one-to-one correspondence with the plurality of second customer facilities, and are each configured to measure a remaining battery level of a storage battery included in an electric storage device of a corresponding second customer facility,
wherein, for each of the plurality of second customer facilities, the management device is configured to allow discharge of an electric storage device comprising a storage battery only in a day previous to a day when the storage battery is predicted to be fully charged.

7. The power flow control system according to claim 6,
wherein the management device is configured to set an upper limit of a total sum of electric power discharged from the electric storage devices in the plurality of second customer facilities to a total sum of electric power that flows to the first power network from the plurality of first customer facilities that each comprise a power generator.

8. A management device for use in the power flow control system according to any one of claims 1 to 7.

9. A program that causes a computer to function as the management device according to claim 8.
